# EUROPÄISCHE PATENTSCHRIFT

(11) **EP 4 397 511 B1**
(45) Veröffentlichungstag und Bekanntmachung des Hinweises auf die Patenterteilung: **14.10.2026**
(21) Anmeldenummer: 23217958.0
(22) Anmeldetag: 19.12.2023
(51) Int. Cl.: B60C 23/04

(54) **BLUETOOTH-REIFENDRUCKÜBERWACHUNGSSYSTEM**
BLUETOOTH TIRE PRESSURE MONITORING SYSTEM
SYSTÈME BLUETOOTH DE SURVEILLANCE DE LA PRESSION DES PNEUS

(30) Priorität: 05.01.2023 DE 102023100227
(43) Veröffentlichungstag der Anmeldung: 10.07.2024
(73) Patentinhaber: Huf Baolong Electronics Bretten GmbH, 75015 Bretten (DE)
(72) Erfinder: Kessler, Ralf, 76327 Pfinztal (DE); Vögeli, Patrick, 76356 Weingarten (DE); Wagner, Markus, 75038 Flehingen (DE)
(74) Vertreter: Twelmeier Mommer & Partner

(56) Entgegenhaltungen:
- EP-A1- 3 792 083
- WO-A1-2022/039719
- DE-B4- 112013 003 014
- US-A1- 2008 018 448
- US-A1- 2019 230 720

## Beschreibung

Die Erfindung geht aus von einem Reifendrucküberwachungssystem mit den im Oberbegriff des Anspruchs 1 angegebenen Merkmalen, wie es beispielsweise aus EP 3 505 373 B1 sowie US 2019/230720 A1 bekannt ist. Derartige Reifendrucküberwachungssystem enthalten an Rädern eines Fahrzeugs montierten Reifendrucküberwachungseinheiten, die jeweils einen Drucksensor enthalten, und eine zentralen Empfangseinheit. Die zentrale Empfangseinheit wird manchmal auch als zentrale Kommunikationseinheit bezeichnet und kommuniziert drahtlos mittels Bluetooth Low Energy mit den Reifendrucküberwachungseinheiten. Weitere Reifendrucküberwachungssysteme sind in US 2008/0018448 A1 und WO 2022/039719 A1 beschrieben.

Bluetooth Low Energy, im Folgenden BLE, ist ein Industriestandard für die Datenübertragung zwischen Geräten über kurze Distanz per Funktechnik (WPAN). Nach BLE können Geräte in unterschiedlichen Betriebsmoden Daten senden. In einem ersten Modus, der als broadcast oder advertising Modus bezeichnet wird, werden Daten unverschlüsselt gesendet und können von jedem BLE-Gerät, das sich innerhalb der Reichweite des sendenden Geräts befindet (in der Regel etwa 10 m) empfangen werden. In einem zweiten Modus, der als Connection-Modus oder paired Modus bezeichnet wird, werden Daten nach einem vereinbarten Schema auf wechselnden Frequenzen gesendet. Wenn zwei BLE-Geräte in dem zweiten Modus miteinander kommunizieren, spricht man auch davon dass sie gekoppelt sind und der Aufbau einer Verbindung in dem zweiten Modus wird als Kopplung bezeichnet.

Da die Frequenzen in kurzen Zeitabständen nach einem vereinbarten Schema gewechselt werden, ist ein Abhören der Kommunikation oder eine Störung durch fremde Geräte in dem gekoppelten Zustand erschwert. Zusätzlich kann in dem Connection-Modus eine Verschlüsselung von Daten erfolgen.

BLE wird zunehmend von Reifendrucküberwachungssystemen zur Kommunikation zwischen an Fahrzeugrädern montierten Reifendrucküberwachungseinheiten und einer zentralen Empfangseinheit des Fahrzeugs genutzt. BLE bietet dabei den Vorteil einer bidirektionalen Kommunikation zwischen Reifendrucküberwachungseinheiten und zentraler Empfangseinheit, so dass die zentrale Empfangseinheit gezielt Druckdaten von Reifendrucküberwachungseinheiten anfordern kann. Zudem kann durch Nutzung des Connection-Modus weitgehend ausgeschlossen werden, dass Druckdaten anderer Fahrzeuge fälschlicherweise empfangen und verarbeitet werden, etwa von einem Fahrzeugsicherheitssystem, das im Falle eines platzenden Reifens automatisch bremst.

Mit zunehmender Verbreitung von BLE kommt es immer häufiger vor, dass auch nicht zu einem Fahrzeug gehörende Reifendrucküberwachungseinheiten, zentrale Empfangseinheiten oder sonstige BLE-Geräte innerhalb der Reichweite der Reifendrucküberwachungseinheiten oder der zentralen Empfangseinheit eines Fahrzeugs sind. Es ist deshalb von zunehmender Bedeutung, dass die Reifendrucküberwachungseinheiten eines Fahrzeugs nur mit der zentralen Empfangseinheit des Fahrzeugs gekoppelt werden, also nur mit der zentralen Empfangseinheit des Fahrzeugs in dem Connection-Modus kommunizieren und nicht auch mit irgendwelchen anderen BLE-Geräten.

Aufgabe der vorliegenden Erfindung ist es, einen Weg aufzuzeigen, wie die Gefahr reduziert werden kann, dass die Reifendrucküberwachungseinheiten eines Fahrzeugs mit einem anderen Gerät als der zentralen Empfangseinheit des Fahrzeugs in dem Connection-Modus kommunizieren.

Diese Aufgabe wird durch ein System mit den im Anspruch 1 angegebenen Merkmalen gelöst. Vorteilhafte Weiterbildungen der Erfindung sind Gegenstand von Unteransprüchen.

In einem erfindungsgemäßen Reifendrucküberwachungssystem weisen die Reifendrucküberwachungseinheiten jeweils einen Speicher auf, in dem beim erstmaligen Koppeln mit einem anderen BLE-Gerät, d.h. dem Initiieren einer Kommunikation in dem Connection-Modus, eine charakteristische Kennung des Verbindungspartners, also der zentralen Empfangseinheit, mit der kommuniziert wird, gespeichert wird. Sobald in diesem Speicher eine charakteristische Kennung hinterlegt ist, nutzt die Reifendrucküberwachungseinheit den Connection-Modus nur noch zur Kommunikation mit diesem Gerät. Aufforderungen anderer BLE-Geräte zur Kommunikation in dem Connection-Modus werden dann ignoriert.

Der Connection-Modus zwischen einer Reifendrucküberwachungseinheit und einer zentralen Empfangseinheit kann grundsätzlich über sehr lange Zeiträume erhalten bleiben, also auch während einer längeren Parkdauer. Allerdings erfordert der Connection-Modus in der Regel eine erhebliche Sendetätigkeit und somit einen erheblichen Energieaufwand, da die Kommunikationspartner im Connection-Modus in vereinbarten Zeitenabständen Informationen austauschen. Um die Belastung einer Batterie der Reifendrucküberwachungseinheit zu reduzieren, kann es deshalb vorteilhaft sein, wenn bei geparktem Fahrzeug die Reifendrucküberwachungseinheiten aufhören mit der zentrale Empfangseinheit in dem Connection-Modus zu kommunizieren, d.h. keine Sendungen mehr zu vereinbarten Zeiten nach einem vereinbarten Schema mehr erfolgen.. Bei einem späteren Fahrtbeginn kann die zentrale Empfangseinheit dann die Reifendrucküberwachungseinheiten über den Advertising-Modus auffordern, in den Connection-Modus zu wechseln. Bei Erhalt einer solchen Aufforderung prüft die Reifendrucküberwachungseinrichtung, ob die charakteristische Kennung des auffordernden Geräts in ihrem Speicher gespeichert ist und wechselt, nur falls dies der Fall ist in den Connection-Modus. Zusätzlich zu der charakteristischen Kennung des Verbindungspartner können in einem Speicher der Reifendrucküberwachungseinheit auch weitere Daten der Kopplung gespeichert sein, beispielsweise ein Schlüssel mit dem zu sendende Daten verschlüsselt und empfange Daten entschlüsselt werden und/oder Details des Schemas nach dem im Connection-Mode kommuniziert wird, etwa Zeitabstände in denen gesendet wird oder welche Frequenzen dafür verwendet werden.

Bei einem erfindungsgemäßen Reifendrucküberwachungssystem lässt sich somit ausschließen, dass Reifendrucküberwachungseinheiten durch Befehle andere BLE-Geräte gestört werden. Es muss lediglich darauf geachtet werden, dass bei der erstmaligen Initiierung des Connection-Modus einer Reifendrucküberwachungseinrichtung die Kommunikation mit der zentralen Empfangseinheit des Fahrzeugs stattfindet. In einer Werkstatt oder Fertigungsanlage eines Fahrzeugherstellers lässt sich dies mit überschaubarem Aufwand gewährleisten.

Bei der charakteristischen Kennung einer zentralen Empfangseinheit sowie einer Reifendrucküberwachungseinheit oder eines anderen BLE-Geräts handelt es sich in der Regel um eine individuelle und unverwechselbare 48 bit lange MAC-Adresse.

Eine vorteilhafte Weiterbildung der Erfindung sieht vor, dass die Reifendrucküberwachungseinheiten eine erstmalige Kopplung, also eine Initiierung einer Kommunikation mit der zentralen Empfangseinheit in dem Connection-Mode, nur vornehmen können, wenn der Drucksensor der Reifendrucküberwachungseinheit einen Druck detektiert, die über einem vorgegebenen Schwellenwert liegt, z.B. über 2 bar. Auf diese Weise lässt sich verhindern, dass in einer Werkstatt noch nicht montierte Reifendrucküberwachungseinheiten Probleme bereiten. Selbst wenn noch nicht montierte Reifendrucküberwachungseinheiten in der Reichweite der zentralen Empfangseinheit sind, ist ausgeschlossen, dass die zentrale Empfangseinheit mit diesen Reifendrucküberwachungseinheiten koppelt und die charakteristische Kennung der zentralen Empfangseinheit in den Speicher einer noch nicht an einem Fahrzeugrad montierten Reifendrucküberwachungseinheit geschrieben wird.

Eine weitere vorteilhafte Weiterbildung der Erfindung sieht vor, dass die Reifendrucküberwachungseinheiten einen Beschleunigungssensor enthalten und eine erstmalige Aufnahme einer Kommunikation mit der zentralen Empfangseinheit in dem Connection-Modus nur vornehmen können, wenn dieser Beschleunigungssensor eine Raddrehung detektiert. Auf diese Weise kann ein Reifendrucküberwachungssystem erstmalig auch dann in Betrieb genommen und eine erstmalige Kopplung der Reifendrucküberwachungseinheiten mit der zentralen Empfangseinheit vorgenommen werden, wenn parkende Fahrzeuge in der Nähe sind.

Eine weitere vorteilhafte Weiterbildung der Erfindung sieht vor, dass eine erstmalige Kopplung, also die Aufnahme einer Kommunikation der Reifendrucküberwachungseinheiten mit der zentralen Empfangseinheit in dem Connection-Modus, nur von der zentralen Empfangseinheit nach einer Eingabe eines Benutzers ausgelöst werden kann. Auf diese Weise kann sichergestellt werden, dass eine erstmalige Initiierung des Connection Modus nur erfolgt, wenn keine anderen BLE-Geräte in der Nähe sind, die zu Störungen führen könnten.

Eine weitere vorteilhafte Weiterbildung der Erfindung sieht vor, dass eine in dem Speicher einer Reifendrucküberwachungseinheit gespeicherte charakteristische Kennung der zentralen Empfangseinheit nur auf einen Befehl der zentralen Empfangseinheit, durch Kontakt eines Werkzeugs mit der Reifendrucküberwachungseinheit oder durch einen LF-Funkbefehl gelöscht werden kann. Wenn die in einer Reifendrucküberwachungseinheit gespeicherte Kennung gelöscht werden kann, ist es vorteilhaft möglich, Reifen eines Fahrzeugs an einem anderen Fahrzeug zu montieren. Wenn die in einer Reifendrucküberwachungseinheit gespeicherte Kennung gelöscht werden kann, besteht aber auch die Gefahr, dass eine solche Löschung missbräuchlich vorgenommen wird, etwa um mit einem anderen BLE-Gerät das Reifendrucküberwachungssystem eines Fahrzeugs zu stören. Indem eine Löschung nur auf einen Befehl der zentralen Empfangseinheit oder durch Kontakt eines Werkzeugs mit der Reifendrucküberwachungseinheit gelöscht werden kann, ist es einerseits möglich, Reifendrucküberwachungseinheiten bei Bedarf, etwa einem Reifenwechsel, einem anderen System zu zuordnen, und andererseits das Reifendrucküberwachungssystem vor Hacker-Angriffen geschützt.

Damit eine in dem Speicher einer Reifendrucküberwachungseinheit gespeicherte charakteristische Kennung mit einem Werkzeug gelöscht werden kann, kann beispielsweise die Reifendrucküberwachungseinheit einen elektrischen Kontakt aufweisen, an den mit einem Werkzeug ein elektrisches Potential angelegt werden kann. Wenn an diesem Kontakt ein elektrisches Potential detektiert wird, das einen vorgegebenen Wert übersteigt oder in einem vorgegebenen Bereich liegt, wird dann der Speicher gelöscht. Eine andere Möglichkeit besteht darin, eine solche Löschung mechanisch auszulösen, etwa durch Drehen eines Schalters.

Gängige BLE-Geräte, wie insbesondere Smartphones, sind nicht zur Kommunikation im LF-Bereich ausgerüstet. Indem eines Reifendrucküberwachungseinheit durch LF-Kommunikation veranlasst wird, eine in ihrem Speicher gespeicherte Kennung eines BLE-Geräts, mit sie im Connection-Mode kommuniziert hat, zu löschen, wird ein Austausch von Reifen, etwa in einer Werkstatt, erleichtert, ohne dass die Sicherheit wesentlich beeinträchtigt wird. Unter dem LF-Bereich wird im Rahmen der Anmeldung der Frequenzbereich von 30 kHz bis 300 kHz verstanden.

## Patentansprüche

1. Reifendrucküberwachungssystem mit an den Rädern eines Fahrzeugs montierten Reifendrucküberwachungseinheiten, die jeweils einen Drucksensor enthalten, und einer zentralen Empfangseinheit,
wobei die Reifendrucküberwachungseinheiten und die zentrale Empfangseinheit dafür ausgelegt sind, miteinander mittels Bluetooth Low Energy zu kommunizieren,
**dadurch gekennzeichnet, dass**
die Reifendrucküberwachungseinheiten bei erstmaliger Kopplung mit der zentralen Empfangseinheit eine charakteristische Kennung der zentralen Empfangseinheit in einem Speicher ablegen, und solange diese Kennung in ihrem Speicher gespeichert ist, mit keinem anderen Gerät koppeln.

2. Reifendrucküberwachungssystem nach Anspruch 1, **dadurch gekennzeichnet, dass** die erstmalige Kopplung der Reifendrucküberwachungseinheiten mit der zentralen Empfangseinheit nur von der zentralen Empfangseinheit nach einer Eingabe eines Benutzers ausgelöst werden kann.

3. Reifendrucküberwachungssystem nach einem der vorstehenden Ansprüche, **dadurch gekennzeichnet, dass** eine in dem Speicher einer Reifendrucküberwachungseinheit gespeicherte charakteristische Kennung der zentralen Empfangseinheit nur auf einen Befehl der zentralen Empfangseinheit, durch Kontakt eines Werkzeugs mit der Reifendrucküberwachungseinheit oder durch einen LF-Funkbefehl gelöscht werden kann.

4. Reifendrucküberwachungssystem nach einem der vorstehenden Ansprüche, **dadurch gekennzeichnet, dass** die Reifendrucküberwachungseinheiten eine erstmalige Kopplung mit der zentralen Empfangseinheit nur vornehmen können, wenn der Drucksensors der Reifendrucküberwachungseinheit einen Druck detektiert, die über einem vorgegebenen Schwellenwert liegt.

5. Reifendrucküberwachungssystem nach einem der vorstehenden Ansprüche, **dadurch gekennzeichnet, dass** die Reifendrucküberwachungseinheiten einen Beschleunigungssensor enthalten und eine erstmalige Kopplung mit der zentralen Empfangseinheit in dem Connection-Modus nur vornehmen können, wenn dieser Beschleunigungssensor eine Raddrehung detektiert.

## Claims

1. Tyre pressure monitoring system comprising tyre pressure monitoring units mounted on the wheels of a vehicle, each of which contains a pressure sensor, and a central receiving unit,
wherein the tyre pressure monitoring units and the central receiving unit are designed to communicate with one another via Bluetooth Low Energy,
**characterised in that**
upon initial pairing with the central receiving unit, the tyre pressure monitoring units store a characteristic identifier of the central receiving unit in a memory, and, for as long as this identifier is stored in their memory, do not pair with any other device.

2. Tyre pressure monitoring system according to claim 1, **characterised in that** the initial pairing of the tyre pressure monitoring units with the central receiving unit can only be initiated by the central receiving unit following a user input.

3. Tyre pressure monitoring system according to any one of the preceding claims, **characterised in that** a characteristic identifier of the central receiving unit stored in the memory of a tyre pressure monitoring unit can only be deleted upon a command from the central receiving unit, by contact of a tool with the tyre pressure monitoring unit, or by an LF radio command.

4. Tyre pressure monitoring system according to any one of the preceding claims, **characterised in that** the tyre pressure monitoring units can only perform an initial pairing with the central receiving unit if the pressure sensor of the tyre pressure monitoring unit detects a pressure that exceeds a predetermined threshold value.

5. Tyre pressure monitoring system according to any one of the preceding claims, **characterised in that** the tyre pressure monitoring units comprise an acceleration sensor and can only establish an initial pairing with the central receiving unit in connection mode if this acceleration sensor detects wheel rotation.

## Revendications

1. Système de surveillance de pression de pneu comprenant des unités de surveillance de pression de pneu montées sur les roues d'un véhicule, chacune contenant un capteur de pression, et une unité de réception centrale,
les unités de surveillance de pression de pneu et l'unité de réception centrale étant conçues pour communiquer entre elles via Bluetooth Low Energy,
**caractérisé en ce que**
lors du couplage initial avec l'unité de réception centrale, les unités de surveillance de pression de pneu enregistrent dans une mémoire un identifiant caractéristique de l'unité de réception centrale et, tant que cet identifiant est stocké dans leur mémoire, ne couplent avec aucun autre appareil.

2. Système de surveillance de pression de pneu selon la revendication 1, **caractérisé en ce que** le couplage initial des unités de surveillance de pression de pneu avec l'unité de réception centrale ne peut être initié que par l'unité de réception centrale après une saisie effectuée par un utilisateur.

3. Système de surveillance de pression de pneu selon l'une des revendications précédentes, **caractérisé en ce qu'**un identifiant caractéristique de l'unité de réception centrale, stocké dans la mémoire d'une unité de surveillance de pression de pneu, ne peut être effacé que sur une commande de l'unité de réception centrale, par contact d'un outil avec l'unité de surveillance de pression de pneu ou par une commande radio LF.

4. Système de surveillance de pression de pneu selon l'une des revendications précédentes, **caractérisé en ce que** les unités de surveillance de pression de pneu ne peuvent effectuer un couplage initial avec l'unité de réception centrale que lorsque le capteur de pression de l'unité de surveillance de pression de pneu détecte une pression supérieure à une valeur seuil prédéfinie.

5. Système de surveillance de pression de pneu selon l'une des revendications précédentes, **caractérisé en ce que** les unités de surveillance de pression de pneu comportent un capteur d'accélération et ne peuvent effectuer un couplage initial avec l'unité de réception centrale en mode Connexion que lorsque ce capteur d'accélération détecte une rotation de la roue.
